# EUROPEAN PATENT APPLICATION

(11) **EP 1 686 286 A2**
(43) Date of publication of application: **02.08.2006**
(21) Application number: 06100992.4
(22) Date of filing: 27.01.2006
(51) Int. Cl.: F16G 1/28

(54) **Method to produce a transmission element, and element thus produced**

(30) Priority: 31.01.2005 IT UD20050008
(71) Applicant: ELATECH SRL, I-24012 Brembilla BG (IT)
(72) Inventor: Scaglia, Riccardo, 20123, Milano (IT)
(74) Representative: Petraz, Gilberto Luigi

(57) **Abstract**

Transmission element (10) comprising a body (11) made of elastomeric material internally reinforced with non-extendible wires and having a determinate hardness and a determinate friction coefficient. The body (11) has teeth (15) made in a piece therewith which define a meshing surface (17), which is directly covered with a covering layer (16) of plastic material, which has a greater hardness and lower friction coefficient than those of the elastomeric material.

## Description

### FIELD OF THE INVENTION

The present invention concerns a method to produce a substantially non-extendible transmission element, such as for example a belt, a strip, a cable or suchlike, and the element thus produced. To be more exact, the element made according to the present invention comprises a body made of elastomeric material and a plurality of teeth protruding from the body which define a meshing surface.

### BACKGROUND OF THE INVENTION

A transmission belt is known, having a body made of polyurethane and internally reinforced by means of substantially non-extendible steel wires.

A belt is known, shaped so as to have a plurality of teeth protruding from the body and defining a meshing surface which, during use, comes into contact with corresponding seatings made in members for the mechanical transmission of power, such as toothed wheels, toothed pulleys, toothed rollers or suchlike.

The polyurethane used for the belts generally has a relatively low hardness comprised between about 80 and 98 shore A, so as to guarantee good elasticity to the belt, and a high coefficient of friction with the surface of said seatings, which is normally comprised between 0.5 and 0.8, when used in combination with metal components.

One disadvantage of this known belt is that the high coefficient of friction with the transmission member causes a high level of noise and provokes both vibrations and also the overheating of the belt. Consequently, the efficiency and the working life of the belt is reduced.

In order to reduce the value of the friction coefficient a belt has been proposed that has a layer of fabric deposited on the meshing surface.

The fabric used has the disadvantage, however, that it does not completely obviate the above disadvantage, since it has a friction coefficient which in any case is too high to significantly reduce the noise, the vibrations and the overheating. Since this fabric is expensive, it also entails a significant increase in the cost of the final product.

A belt is also known in which an outer layer of polyethylene is applied on the layer of fabric.

This last solution, however, is complex and costly, since it requires the use of the layer of fabric, with the function of gripping the polyurethane body and the outer polyethylene layer.

One purpose of the present invention is to perfect a method to produce a transmission element which is simple and economical and which comprises a limited number of working steps.

Another purpose of the present invention is to achieve a transmission element which during use has high efficiency, high resistance to abrasion, is silent and keeps these characteristics for a long period of time.

The Applicant has devised, tested and embodied the present invention to overcome the shortcomings of the state of the art and to obtain these and other purposes and advantages.

### SUMMARY OF THE INVENTION

The present invention is set forth and characterized in the main claims, while the dependent claims describe other characteristics of the invention or variants to the main inventive idea.

In accordance with the above purposes, a method to produce a substantially non-extendible transmission element, such as for example a belt, a strip, a cable or suchlike, comprises a first step during which a body of elastomeric material is made, internally reinforced with a plurality of wires made of substantially non-extendible material, for example metal or fiber glass, carbon fiber or other synthetic fibers, and having a determinate hardness and a determinate friction coefficient.

During the first step a plurality of teeth are made in a piece on the body, which define a meshing surface.

According to one characteristic of the invention, the method also comprises a second step during which on the meshing surface a covering layer is directly applied, made of plastic material having greater hardness and lower friction coefficient than those of the elastomeric material.

The element achieved using the method according to the present invention, thanks to the covering layer made of plastic material, has high efficiency, is silent and keeps these characteristics for a long period of time; also, it is made in a simple and economic manner, and with a limited number of working steps.

The covering layer advantageously comprises polyamide or polyethylene or other plastic material, with a friction coefficient lower than that of the body made of elastomeric material and preferably comprised between about 0.1 and 0.45, and a hardness greater by at least some orders of size than that of the elastomeric material.

The elastomeric material has a relatively low hardness, comprised between about 80 and about 100 shore A, advantageously between about 90 and about 94 shore A, and a friction coefficient comprised between about 0.5 and about 0.8.

The attachment of the covering layer and the meshing surface is obtained by means of thermo-gluing, and does not require a gripping layer typical of known transmission elements.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a longitudinal section of a part of a transmission element according to the present invention;
- fig. 2 is a partly sectioned view of a detail of the element in fig. 1.

### DETAILED DESCRIPTION OF A PREFERENTIAL FORM OF EMBODIMENT

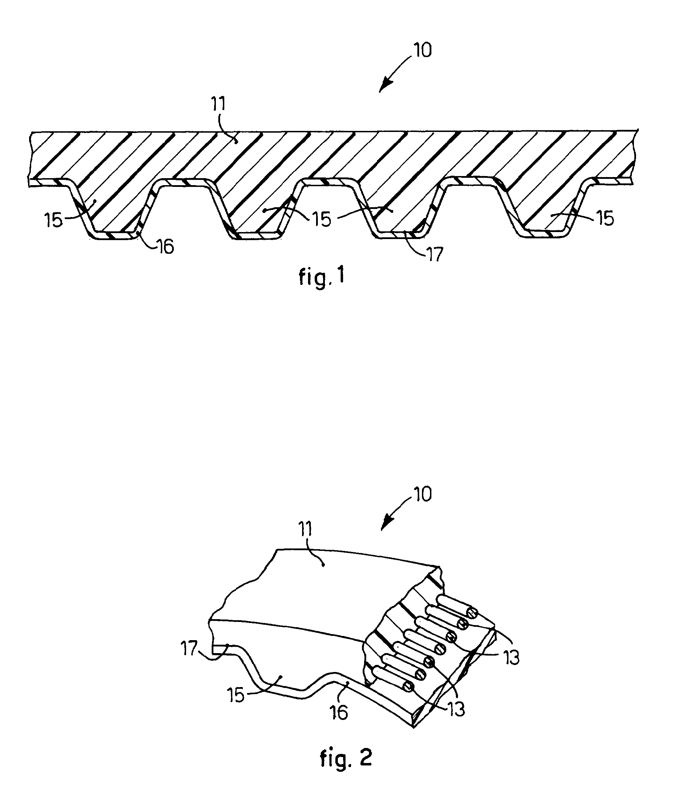

With reference to fig. 1, a transmission element which in this case is a toothed belt 10, is used for the mechanical transmission of power for example between toothed wheels, pulleys, rollers or similar devices, not shown here.

The toothed belt 10 comprises a body 11 (figs. 1 and 2) made of elastomeric material, for example polyurethane, having a hardness comprised between about 90 and 94 shore A and a coefficient of friction on a metal surface comprised between about 0.5 and 0.8.

The relatively low hardness guarantees in particular a good elasticity for the toothed belt 10.

The body 11 is internally reinforced by means of a plurality of wires 13, for example made of steel, which in the case shown here are disposed longitudinally.

The function of the wires 13 is to increase the strength of the toothed belt 10 and guarantee its non-extendibility to traction.

The toothed belt 10 also comprises a plurality of teeth 15 protruding with respect to the body 11 and defining a meshing surface 17.

In the case shown here, the teeth 15 are disposed in a direction transverse to the longitudinal axis of the body 11, but they can have any inclination whatsoever with respect to said axis, for example 45°.

The toothed belt 10 also comprises a covering layer 16 disposed to cover the meshing surface 17.

The covering layer 16 is made of polyethylene, polyamide or other plastic material with a friction coefficient lower than that of the body of the belt made of elastomeric material and preferably comprised between about 0.1 and 0.45.

The relatively high hardness and the relatively low friction coefficient allow to reduce the problems deriving from the mechanical contact and the continual rubbing of the teeth 15 and said devices, guaranteeing high efficiency and long working life to the toothed belt 10.

The toothed belt 10 is of variable size, for example it has a width comprised between about 6 and 500 mm, and a thickness comprised between about 1 and 20 mm, while the thickness of the covering layer can vary between about 0.1 and about 1 mm.

In order to produce the toothed belt 10 a method is provided according to the invention comprising at least the steps indicated hereafter.

In a first step, the body 11 is made in a known manner, for example by injecting elastomeric material in fluid form by means of an extruder inside a molding cavity defined by a mold with a roller or a rotary drum, and by an endless belt, which is held thrust on one part of the lateral surface of the roller mold.

During the first step, the body 11 and the teeth 15 are made, while the wires 13 are simultaneously inserted.

In a subsequent second step, the meshing surface 17 is covered with the covering layer 16, which can be pre-formed hot on the roller mold, or pre-heated so as to make possible the coupling and thermo-gluing with the meshing surface 17 advantageously in a single operation, or welded with a process of co-extrusion.

The thermo-gluing is performed at a temperature comprised between abut 50 and 200°C.

According to a variant of the present invention, the covering layer 16 can be attached to the meshing surface 17 by means of gluing.

According to another variant, the two production steps can be performed advantageously simultaneously by extruding the thermoplastic material directly onto a pre-formed laminate of plastic material.

According to another variant, it is also provided that the plastic material of the covering layer 16 is sprayed in fluid form directly onto the meshing surface 17.

It is clear that modifications and/or additions of parts and/or steps may be made to the toothed belt 10 and the method as described heretofore, without departing from the field and scope of the present invention.

According to a variant of the present invention it is provided to make the toothed belt 10 by injecting the material of the covering layer 16 in fluid form, by means of a first extruder, inside a first molding cavity, for example defined by a toothed wheel and a strip. In this way, the covering layer 16 acquires a desired thickness and a desired toothed form.

Afterwards, the covering layer 16 thus formed is inserted together with the wires 13 into a second molding cavity, where the body 11 is made by injecting the elastomeric material in fluid form, by means of a second extruder, above the covering layer 16, in this way obtaining the toothed belt 10.

It is also clear that, although the present invention has been described with reference to some specific examples, a person of skill in the art shall certainly be able to achieve many other equivalent forms of method to produce a transmission element, and transmission elements thus produced, having the characteristics as set forth in the claims and hence all coming within the field of protection defined thereby.

## Claims

1. Method to produce a transmission element (10) comprising a first step, during which a body (11) is made of elastomeric material internally reinforced with a plurality of wires (13) made of substantially non-extendible material and having a determinate hardness and a determinate friction coefficient, and during which on said body (11) a plurality of teeth (15) are also made in a piece therewith which define a meshing surface (17), **characterized in that** it also comprises a second step during which on said meshing surface (17) a covering layer (16) is directly applied made of plastic material having a greater hardness and lower friction coefficient than those of said elastomeric material.

2. Method as in claim 1, **characterized in that** said steps can be carried out simultaneously by extruding the elastomeric material directly onto a pre-formed laminate of plastic material defining said covering layer (16).

3. Method as in claim 1, **characterized in that** said plastic material with low friction coefficient is co-extruded with said elastomeric material.

4. Method as in claim 1, 2 or 3, **characterized in that** said elastomeric material has a hardness comprised between about 80 and about 100 shore A and a friction coefficient comprised between about 0.5 and about 0.8, and **in that** said plastic material has a hardness greater by at least some orders of size than that of said elastomeric material, and a friction coefficient comprised between about 0.1 and about 0.45.

5. Method as in any claim hereinbefore, **characterized in that** said plastic material comprises polyamide or polyethylene or other plastic material with a friction coefficient lower than that of the body (11) of said transmission element (10) made of elastomeric material and preferably comprised between about 0.1 and 0.45.

6. Method as in any claim hereinbefore, **characterized in that** during said second step, said covering layer (16) is applied to said meshing surface (17) by means of thermo-gluing.

7. Method as in claim 6, **characterized in that** said thermo-gluing is carried out at a temperature comprised between about 50°C and about 200°C.

8. Method as in any claim from 1 to 5, **characterized in that** during said second step, said covering layer (16) is applied by means of spraying said plastic material in fluid form.

9. Transmission element comprising a body (11) made of elastomeric material internally reinforced with a plurality of wires (13) made of substantially non-extendible material and having a determinate hardness and a determinate friction coefficient, said body (11) having a plurality of teeth (15) made in a piece therewith which define a meshing surface (17), **characterized in that** said meshing surface (17) is directly covered with a covering layer (16) of plastic material having a greater hardness and lower friction coefficient than those of said elastomeric material.

10. Transmission element as in claim 9, **characterized in that** said elastomeric material has a hardness comprised between about 80 and about 100 shore A and a friction coefficient comprised between about 0.5 and about 0.8, and **in that** said plastic material has a hardness greater than that of the body (11) made of elastomeric material, and a friction coefficient comprised between about 0.1 and about 0.45.

11. Transmission element as in claim 9 or 10, **characterized in that** said plastic material comprises polyamide or polyethylene or other plastic material with a friction coefficient lower than that of the body (11) of said transmission element (10).
